# EUROPÄISCHE PATENTSCHRIFT

(11) **EP 0 552 406 B1**
(45) Veröffentlichungstag und Bekanntmachung des Hinweises auf die Patenterteilung: **01.03.1995**
(21) Anmeldenummer: 92115585.9
(22) Anmeldetag: 11.09.1992
(51) Int. Cl.: H02P 13/12

(54) **Verfahren zur Reduzierung des Einschaltstromstosses beim Betreiben einer induktivitätsbhafteten Last**
Method for reducing the cut-in current in operating an inductive load
Procédé pour réduire le courant d'entrée lors de la mise en service d'une charge inductive

(30) Priorität: 21.12.1991 DE 4142644
(43) Veröffentlichungstag der Anmeldung: 28.07.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: Konstanzer, Michael, W-7800 Freiburg (DE)

(56) Entgegenhaltungen:
- DE-A- 3 614 057
- DE-A- 4 011 170

## Beschreibung

Die Erfindung bezieht sich auf ein Verfahren zur Reduzierung des Einschaltstromstoßes beim Betreiben einer induktivitätsbehafteten und mit einem magnetisierbaren Kern versehenen Last an einem Wechselstromnetz, insbesondere eines Transformators, wobei zumindest zeitweise ein Phasenanschnitt vorgesehen ist und ein Abschalten der Last im Nulldurchgang der treibenden Netzwechselspannung vorgesehen ist, wobei nach dem Abschalten der induktiven Last vom Wechselstromnetz diese induktive Last mit einem Abschalt-Rücksetzimpuls beaufschlagt wird.

Es sind bereits verschiedene Verfahren zur Reduzierung des Einschaltstromstoßes bei induktiven Lasten bekannt.

Aus der DE-A-40 11 170 ist es bereits bekannt, nach dem Abschalten der induktiven Last diese durch einen Entladestomstoß eines Kondensators in eine maximale Remanenzlage zu bringen. Der Entladestromstoß kann einige Millisekunden nach dem Ausschalten der Netzwechselspannung z.B. im Nulldurchgang erfolgen und bei einem nachfolgenden Einschalten wird dann von der gesetzten, bekannten Remanenzlage ausgegangen. Dieses Einschaltverfahren ist zum Remanenzsetzen vor einem Einschalten der induktivitätsbehafteten Last vorgesehen. Der Kondensator muß entsprechend der Größe des Tranformators und der angeschalteten Last in seiner Kapazität bemessen sein. Für den Einsatz im Pulsgruppenbetrieb und dabei wechselnden Lastverhältnissen ist das Beaufschlagen mit einem Kondensatorstromstoß nicht vorgesehen.

Bei Pulsgruppenbetrieb ist es ebenfalls aus der DE 40 11 170 bekannt, bei jedem neuen Einschalten zu Beginn des Pulsgruppenbetriebes ein mit der letzten Spannungshalbwelle vor dem Abschalten bzw. dem Ende einer Pulsgruppe gleichphasigen Halbwellenanschnitt vorzusehen, der so bemessen ist, daß die Magnetisierung im Eisenkern nicht in die Sättigung gelangt.
In praktischen Versuchen hat sich jedoch herausgestellt, daß ein spitzenstromfreies Einschalten der Last nicht immer erreicht wird, weil verschiedene Einflußfaktoren die Remanenzlage des Eisenkernes verändern.

Wegen der gelegentlich auftretenden Einschalt-Stromspitzen ist man deshalb bisher gezwungen, die Bauteile des Pulsgruppenstellers, den meist die induktive Last bildenden Transformator und auch die vorgesehenen Sicherungen entsprechend überzudimensionieren. Allerdings kann dadurch das Netz mit hohen Bildstromspitzen belastet werden, was u.a. erheblichen Nachteilen auch zu einem erhöhten Stromverbrauch führt.

Es hat sich herausgestellt, daß als Einflußfaktoren zur Veränderung der Remanenzlage insbesondere die Belastung des Transformators und auch die Pausenzeit zwischen den Pulsgruppen ursächlich sind. Außerdem ist als weitere Ursache die aus RC-Gliedern bestehende Beschaltung der Stellglieder vorhanden, durch die in den Pulspausen eine Wechselspannung am Transformator ansteht, deren Amplitude je nach Belastung des Transformators einige Volt bis zu mehr als 100 Volt (bei üblicher Netzspannung) betragen kann. Diese Wechselspannung führt zu einer Entmagnetisierung des Eisenkernes im Transformator, die um so größer ist, je länger die Strompause ist und je hochohmiger die Last am Transformator während dieser Pause ist.

Die Amplitude der Entmagnetisierungs-Wechselspannuung hängt außer von der Größe des Widerstandes und des Kondensators des RC-Gliedes auch von der sekundärseitigen Belastung des Transformators ab. Ist der Transformator sekundärseitig mit einer großen Last beschaltet, bricht die Entmagnetisierungs-Wechselspannung zusammen. Damit findet keine oder nur eine geringe Entmagnetisierung statt bzw. diese dauert bei kleiner Entmagnetisierungsspannung länger. Durch die Entmagnetisierung bleibt die Remanenzlage, die sich einstellt, wenn am Ende einer Spannungshalbwelle ausgeschaltet wird, nicht erhalten. Vielmehr wandert die Magnetisierung zu geringeren Werten hin und durchläuft schließlich nach einigen Netzvollwellen eine kleinere Hystereseschleife innerhalb der größeren Betriebshysteresekurve.
Damit werden aber von der urspünglichen Remanenzlage beim Ausschalten erheblich abweichende Voraussetzungen für das Einschalten geschaffen.

Wegen der weiteren Einflußfaktoren, nämlich sekundärseitig (und/oder primärseitig) unterschiedlichen Belastungen des Transformators und unterschiedlichen Pausenzeiten zwischen den Pulsgruppen verändert sich die unmittelbar nach dem Ausschalten der Last vorhandene Remanenz ebenfalls, so daß beim Beginn einer nächsten Pulsgruppe nicht mehr von der urspünglichen Ausschalt-Remanenzlage bei der Bemessung des Start-Halbwellenanschnittes ausgegangen werden kann. Die nicht exakt vorherbestimmbare Änderung der Remanenz führt dann beim Einschalten zu den unerwünschten Einschaltstromspitzen. Zu berücksichtigen ist noch, daß die Änderung der Remanenz auch vom Material des Transformatorbleches abhängt. Die Remanenzänderungen bis zu einem praktisch stationären Zustand der Magnetisierung können je nach Material in einer Zeit von etwa 20 Millisekunden bis zu mehreren Sekunden und mehr ablaufen.

Aufgabe der vorliegenden Erfindung ist es, ein Verfahren zur Reduzierung des Einschaltstromstoßes insbesondere bei Pulsgruppenbetrieb zu schaffen, bei dem die vorbeschriebenen Einflußfaktoren berücksichtigt sind und durch das Einschaltstromspitzen vermieden werden.

Zur Lösung dieser Aufgabe wird erfindungsgemäß insbesondere vorgeschlagen, daß der Abschalt-Rücksetzimpuls innerhalb der auf den Abschaltzeitpunkt folgenden Spannungshalbwelle oder einer zu dieser gleichphasigen, nachfolgenden Spannungshalbwelle für einen vorgebbaren Zeitabschnitt innerhalb einer dieser Halbwellen vorgesehen ist und daß der Abschalt-Rücksetzimpuls bezüglich seiner Spannungs-Zeit-Fläche in Abhängigkeit von der Amplitude oder der Spannungs-Zeit-Fläche des nach dem Abschalten auftretenden Überschwing-Spannungsimpluses bemessen wird und umso größer eingestellt wird, je kleiner der Überschwing-Spannungsimpuls ist.

Durch diesen Abschalt-Rücksetzimpuls wird die Entmagnetisierung und damit auch das Rücksetzen auf einen stationären Wert beschleunigt und in sehr kurzer Zeit vorgenommen, wobei dies unabhängig von der Pulspausenzeit und der Last erfolgt. Die vorhandenen Einflußfaktoren machen sich dadurch praktisch nicht mehr bemerkbar, so daß beim Einschalten der Last exakt von einem dann bekannten Betriebszustand bezügl. der Remanenzlage ausgegangen werden kann. Überhöhte Einschaltstromstöße können dadurch wirksam vermieden werden. Es wurde herausgefunden, daß der Überschwing-Spannungsimpuls von der Größe der an den Transformator angeschlossenen Last abhängig ist. Wird nun der Abschalt-Rücksetzimpuls praktisch umgekehrt proportional zu dem Überschwing-Spannungsimpuls eingestellt, so führt dies auch bei unterschiedlichen Lastfällen zu einem spitzenstromfreien Einschalten der Last.

Durch die Maßnahme des Anspruches 2 wird erreicht, daß sich insbesondere der Einfluß einer vorhandenen RC-Beschaltung parallel zu dem Halbleiter-Wechselstromschalter nicht negativ auswirkt. Die wegen der Beschaltung in einer "kleinen" Hysteresekurve während der Pulspausen umlaufende Magnetisierung des Transformatorkernes befindet sich nämlich bei einer solchen gleichphasigen Einschaltung in einem Punkt, der bedingt durch die Phasenverschiebung zwischen Netzwechselspannung und der am Transformator anliegenden Ummagnetisierungsspannung, zu dem Einschaltzeitpunkt der ohne Entmagnetisierung vorliegt, paßt.

Die Bestimmung des Anschnittwinkels der Start-Spannungshalbwelle ist dabei so vorgesehen, daß keine Sättigung der Magnetisierung auftritt. Dies kann beispielsweise durch Messung und Überprüfung der Blindströme auf Symmetrie während der nächsten beiden Halbwellen, durch Überprüfung von Blind- und Wirkstrom auf Gleichheit oder durch Messung des Leerlaufstromes erfolgen.

Eine Ausgestaltung der Erfindung für die Schutz beansprucht wird sieht vor, daß die an Pulsgruppen betriebene Last in den Pulsgruppenpausen mit gegenüber dem Lastfall reduziertem Spannungs-Effektivwert beaufschlagt wird und daß diese Teilbeaufschlagung jeweils gleichphasig mit der Spannungsbeaufschlagungshalbwelle im Leerlauf- oder Lastfall vor dem Abschaltzeitpunkt erfolgt.

Dadurch wird die sich durch Entmagnetisierung oder Ummagnetisierung einstellende Änderung der Remanenz zu von der Ausschaltlage kleineren Werten hin mit jeder Strombeaufschlagung praktisch rückgängig gemacht und dadurch auf einem vorgegebenen Wert gehalten.

Insbesondere kann die Entmagnetisierung durch das RC-Glied laufend rückgängig gemacht werden. Wenn sich die Last stark ändert oder Leerlauf eintritt, muß die laufende Rücksetzung der Remanenz entsprechend korrigiert werden, weil sich das lastabhängige "Kriechen" und Selbstentmagnetisieren dadurch verändert.

Vorzugsweise werden die jeweiligen Strombeaufschlagungen der Last in den Pulsgruppenpausen bezüglich ihrer Spannungs-Zeit-Flächen in Abhängigkeit von der Größe des Überschwing-Spannungsimpulses nach dem Ausschalten der Last oder nach einem direkt vorangegangenen Strombeaufschlagungspuls, insbesondere proportional dazu eingestellt. Damit wird das Ändern der remanenten Magnetisierung auch bei wechselnden Lasten und Pausenzeiten selektiv berücksichtigt. Je größer ein vorausgegangener Überschwing-Spannungsimpuls war, um so größer wird auch in den Pulsgruppenpausen der Effektivwert der Bestromung gewählt.

Zweckmäßigerweise wird bei einem Transformator als Last die Strombeaufschlagung in den Pulsgruppenpausen nur bei Leerlauf der Sekundärseite des Transformators vorgenommen. Versuche haben gezeigt, daß das Entmagnetisieren im Leerlauf des Transformators wesentlich schneller abläuft als bei angeschlossener Last. Es ist deshalb auch bei in den Pulsgruppenpausen sekundärseitig angeschlossener Last nicht unbedingt erforderlich, die Remanenz laufend in den Pulsgruppenpausen zurückzuführen. Dies ergibt u.a. eine Reduzierung der in den Strompausen an sich unerwünschten Bestromung auf einen tolerierbaren Wert.

Zur genauen Anpassung der Maßnahmen für ein definiertes Remanenzrück-oder hochsetzen kann es vorteilhaft sein, wenn zur Bestimmung des Abschalt-Rücksetzimpulses und/oder zur Bestimmung der Spannungsbeaufschlagung in den Pulsgruppenpausen und/oder zur Bestimmung des Einschaltzeitpunktes innerhalb einer Spannungshalbwelle, der während der letzten Spannungshalbwelle vor dem Ausschalten fließende Strom sowie die Länge der Pulsgruppenpause gemessen werden.

Zusätzliche Ausgestaltungen der Erfindung sind in den weiteren Unteransprüchen aufgeführt.

Nachstehend ist die Erfindung mit ihren wesentlichen Einzelheiten anhand der Zeichnungen noch näher erläutert.

Es zeigt:
- Fig.1: Ein Blockschaltbild zum erfindungsgemäßen Betreiben einer induktivitätsbehafteten Last an einem Einphasenwechselstromnetz,
- Fig.2: den Spannungsverlauf an einer induktiven Last ,
- Fig.3: ein der Figur 2 zugeordnetes Diagramm mit dem Verlauf der zugehörigen Ströme an der induktiven Last,
- Fig.4: ein Diagramm mit Darstellung der Hystersekurve einer induktiven Last,
- Fig.5: eine Diagramm-Zeile mit Darstellung der Spannung an einer induktiven Last bei Pulsgruppenbetrieb und Teilbestromung in den Pulspausen,
- Fig.6: eine Fig. 5 zugeordnete Diagrammzeile mit Darstellung des Stromes und
- Fig.7: eine Fig. 5 und Fig. 6 zugeordnete Diagrammzeile mit Darstellung der Last-Zuschaltkurve.

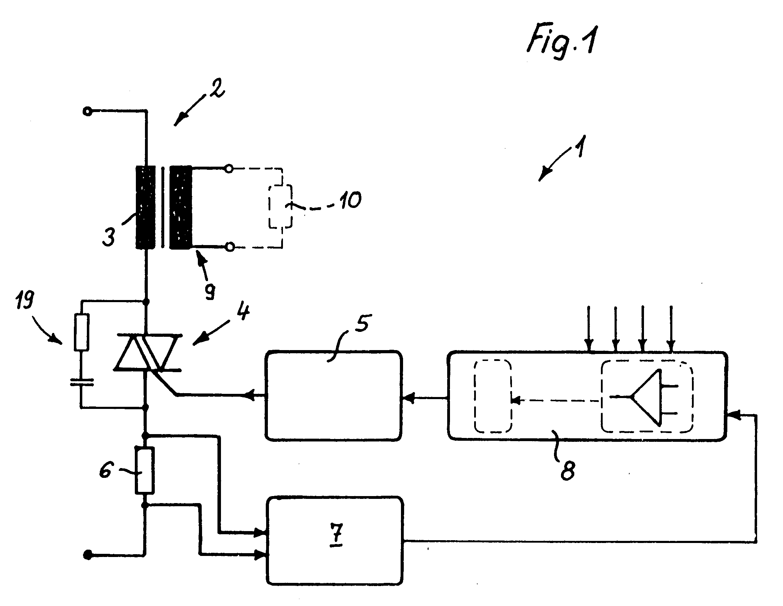

Fig. 1 zeigt eine mögliche Ausführungsform einer Vorrichtung 1 zur Durchführung des erfindungsgemäßen Verfahrens und dabei insbesondere zum Betreiben eines Transformators 2, der eine induktive Last darstellt, an einem einphasigen Wechselstromnetz. Analoges wie für dieses Ausführungsbeispiel in Verbindung mit einem einphasigen Netz gilt auch für mehrphasige Netze.

Die Vorrichtung 1 ermöglicht das Betreiben einer induktiven Last, ohne daß beim Einschalten überhöhte Einschaltstromspitzen auftreten.
Die vorliegende Erfindung befasst sich insbesondere mit einem Pulsgruppenbetrieb, wo der Transformator 2 oder dergleichen für eine oder mehrere Spannungshalbwellen an das Netz geschaltet wird und wobei anschließend bis zu einer nächsten Pulsgruppe eine Pulspause vorgesehen ist. Der Pulsgruppenbetrieb ist eine Möglichkeit zur Leistungssteuerung und hat den Vorteil, daß in der Nähe der Nulldurchgänge der Wechselspannung ein-und ausgeschaltet wird, so daß für das Netz belastende Störspannungen vermieden werden.

In Reihe mit der Primärwicklung 3 des Transformators 2 ist ein Wechselstromschalter 4 in Form eines Triacs geschaltet, der mit einer Pulsgruppen- und Phasenanschnittsteuerung 5 in Steuerverbindung steht. Weiter befindet sich in Reihe geschaltet mit dem Wechselstromschalter 4 im Laststromkreis noch ein Strommessshunt 6, an den eine Strommesseinrichtung 7 angeschlossen ist. Mit Hilfe der Strommesseinrichtung 7 können sowohl Wirk- als auch Blindströme gemessen werden.

Zu der Steuerungseinrichtung für den Wechselstromschalter 4 gehört außer der Pulsgruppen- und Phasenanschnittsteuerung 5 noch eine Ablaufsteuerung 8. Diese Ablaufsteuerung 8 hat außer dem von der Strommesseinrichtung 7 kommenden Eingang weitere Steuereingänge für ein Start/Stoppsignal, für den Soll-Anschnittwinkel und die Pulsgruppen und ggf. auch einen oder mehrere Eingänge für eine übergeordnete Steuerung.

An die Sekundärwicklung 9 des Transformators 2 können unterschiedliche Lasten 10 angeschlossen sein. In Fig. 1 ist eine Ohmsche Last strichliniert angedeutet. Beispielsweise für eine Punktschweiß-Anwendung könnte die Last 10 eine geschlossene und vom Schweißobjekt überbrückte Schweißzange sein.

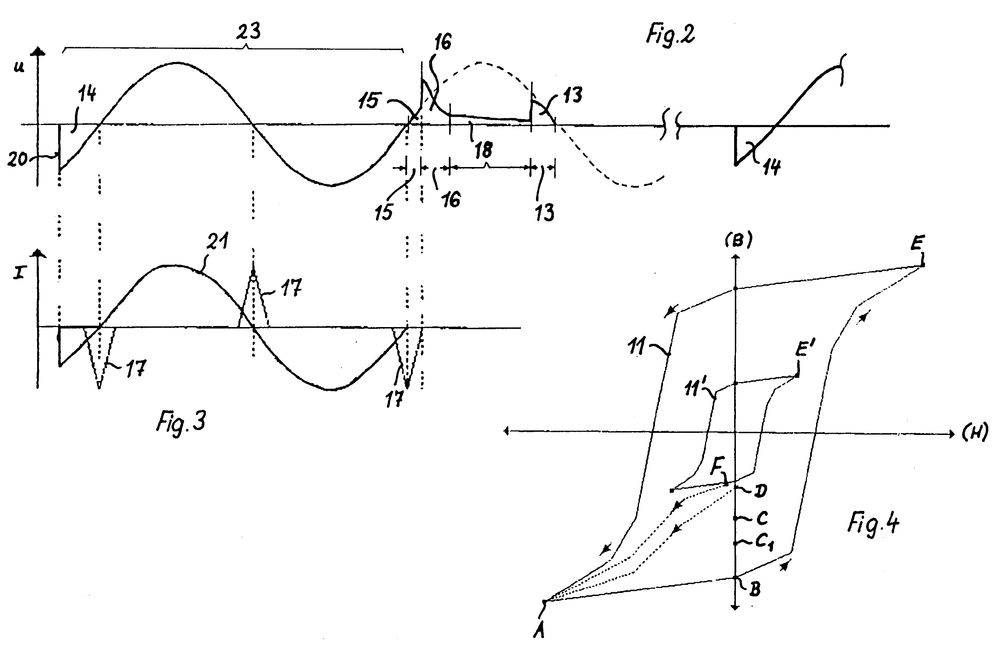

Beim ersten Einschalten des Transformators 2 wird zunächst die Magnetisierung des Transformatorkernes auf einen Maximalwert gebracht, der in der in Fig. 4 gezeigten Hysteresekurve 11 einem der beiden Umkehrpunkte A oder E entspricht. Im Umkehrpunkt A befindet sich die Magnetisierung am Ende der negativen Netzspannungshalbwelle und dementsprechend im Umkehrpunkt E am Ende der positiven Spannungshalbwelle. Um die Magnetisierung in einen der Umkehrpunkte A oder E zu treiben, können verschiedene "Startverfahren" verwendet werden. Befindet sich der Transformator im Leerlauf, also ohne primär- oder sekundärseitige Last, so werden zunächst in ihrem Effekivwert sehr kleine, unipolare, z.B. negative Spannungsimpulse auf die Primärwicklung 3 des Transformators gegeben, wobei der Effektivwert der Spannungspulse vergrößert wird, indem mit Hilfe der Pulsgruppen- und Phasenanschnittsteuerung 5 die Spannungshalbwellenanschnitte vergrößert werden. Gleichzeitig wird der Strom mit Hilfe des Strommess-Shuntes 6 und der angeschlossenen Strommeßeinrichtung 7 überwacht. Wird bei ein der Ablaufsteuerung 8 vorgegebener Stromschwellwert überschritten, ist dies ein Zeichen, daß sich die Magnetisierung in einem der Umkehrpunkte, beispielsweise im Umkehrpunkt A bei negativer Spannungsbeaufschlagung, befindet. Der Schwellwert ist dabei so vorgegeben, daß die Magnetisierung nicht weiter über den Umkehrpunkt hinaus in den Sättigungsbereich läuft.Der zugehörige Spannungsabschnitt ist der für das spätere Volleinschalten richtige Punkt. Mit diesem Spannungsabschnitt kann dann, wie in Fig. 2 gezeigt, optimal und spitzenstromfrei eingeschaltet werden. Ergeben sich im Leerlauf innerhalb der direkt nachfolgenden Wechselspannungsperiode etwa symmetrische Blindströme, so ist dies ein Zeichen, daß die Magnetisierung innerhalb der Hysteresekurve 11 verläuft. Bei belastetem Transformator kann auch während dem ersten "Remanenzsetzen" der Wirk- und der Blindstrom verglichen werden. Der sich bei Gleichheit von Blind- und Wirkstrom ergebende Spannungshalbwellenanschnitt wird dann für das weitere Einschalten verwendet.

Im Ausführungsbeispiel soll der Transformator 2 an Pulsgruppen betrieben werden, wobei eine bestimmte Anzahl von Netzspannungsvollwellen eine Pulsgruppe bildet und dazwischen Pulsgruppenpausen vorgesehen sind. Aus dem Verhältnis der Länge der Pulsgruppen und der Pulspausen ergibt sich die der Last (Transformator 2) zugeführte Leistung. Der Pulsgruppenbetrieb findet z.B. Anwendung bei Prozeßheizungen in der Industrie oder beim Punktschweißen.

Der beim ersten Einschalten des Transformators bestimmte Phasenanschnittwinkel ist nicht für alle Last- und Pulspausenlängen optimal. Der Phasenanschnittwinkel beim Einschalten müßte dementsprechend zum stromspitzenfreien Einschalten jeweils last- und pausenzeitabhängig nachgeführt werden. Dies ist jedoch problematisch, weil die Nachführkriterien nicht im voraus bekannt sind, da sich sowohl die an den Transformator geschaltete Last 10 als auch die zwischen den Pulsgruppen vorhandenen Pausen ändern können. Diese führen nämlich zu einer Lageveränderung der remanenten Induktion, die dann beispielsweise zwischen dem instabilen Remanenzpunkt B (Fig. 4) und beispielsweise dem auf der Induktionsachse 12 zu kleineren Remanenzwerten verschobenen Punkt C liegen kann. Es ist somit für den Start der nächsten Pulsgruppe keine exakt vorhersehbare Ausgangssituation bezüglich der Remanenzlage vorhanden.

Erfindungsgemäß wird nun nach dem Abschalten des Transformators vom Wechselstromnetz am Ende einer Pulsgruppe innerhalb der Pulspause eine Strombeaufschlagung des Transformators mit einem Abschalt-Rücksetzimpuls 13 vorgesehen (vgl. Fig. 2). Dieser Abschalt-Rücksetzimpuls 13 hat eine zur letzten Halbwelle der Pulsgruppe entgegengesetze Polarität. Dadurch wird bewirkt, daß die Magnetisierung des Transformatorkernes in einen vorherbestimmbaren Remanenzbereich gebracht wird. Die durch Laständerungen oder Pulspausenänderungen weiterhin vorhandenen Einflußfaktoren werden durch diesen Abschalt-Rücksetzimpuls 13 praktisch unwirksam gemacht.

Im Ausführungsbeispiel ist der durch den Abschalt-Rücksetzimpuls 13 in eine weitgehend stabile Endlage verschobene Remanenzpunkt mit D bezeichnet.
Von dieser bekannten Remanenzlage D kann dann ein stromspitzenfreier Start der nächsten Pulsgruppe erfolgen, indem der Phasenanschnittwinkel für den im Ausführungsbeispiel negativen Einschaltabschnitt 14 (vgl. Fig. 2) so bemessen wird, daß die Magnetisierung bis zum Umkehrpunkt A der Hysteresekurve 11 geführt wird.
Der Abschalt-Rücksetzimpuls 13 kann innerhalb der auf den Abschaltzeitpunkt folgenden Spannungshalbwelle der Netzwechselspannung oder einer zu dieser gleichphasigen, nachfolgenden Spannungshalbwelle innerhalb der Pulspause vorgesehen sein,muß jedoch, je später er vorgesehen ist,umso kleiner sein.

Fig. 2 zeigt den Spannungsverlauf am Transformator 2, wobei die hier gezeigte Pulsgruppe einer Periode der Netzwechselspannung entspricht. Im Anschluß an den Nulldurchgang der letzten Spannungshalbwelle schließt sich ein Abkommutierungsabschnitt 15 und an diesen ein Abschnitt mit einem Überschwing-Spannungsimpuls 16 an.

Der Abkommutierungsabschnitt 15 entsteht, weil zwischen der Spannung und dem Blindstrom 17 (vgl. Fig. 3) eine Phasenverschiebung vorhanden ist, wobei der durch einen Triac gebildete Halbleiter- Wechselstromschalter 4 erst dann sperrt, wenn der Strom zu Null wird. Zu diesem Zeitpunkt hat dann die Spannung am Transformator die am Ende des Abkommutierungsabschnittes 15 anstehende Spannung erreicht.
Im Stromnullpunkt, also am Ende des Abkommutierungsabschnittes 15 befindet sich die Magnetisierung des Eisenkernes des Transformators 2 im instabilen Remanenzpunkt B. Der Wirkstrom ist in Fig. 3 mit 21 bezeichnet.

Nach einer kurzen Pulsgruppenpause und/oder bei hoher, an dem Transformator 2 angeschlossener Last 10 kann sich die Remanenzlage des Transformatorkernes beispielsweise bis in den Remanenzpunkt C₁ verändert haben. Der Remanenzpunkt C zeigt die remanente Induktion, die sich nach einer größeren Pulspause und/oder bei kleiner Last einstellen kann. Der Überschwing-Spannungsimpuls 16 richtet sich nach der Größe der an den Transformator 2 angeschlossenen Last. Je kleiner diese Last ist, je größer wird der Überschwing-Spannungsimpuls und entsprechend weiter wird die Remanenzlage des Transformatorkernes zu niedrigeren Werten mit größerem Abstand zum instabilen Remanenzpunkt B verschoben.

An den Überschwing-Spannungsimpuls schließt sich ein Bereich 18 an, in dem die remanente Induktion allmählich abnimmt. In diesem Abschnitt erfolgt praktisch ein langsames "Kriechen" mit kleinerwerdender Induktion.

Der vor dem nächsten Einschalten einer Pulsgruppe vorgesehene Abschalt-Rücksetzimpuls 13 kann in einer Vielzahl von Anwendungsfällen konstant nach einem einmaligen Einstellen beibehalten bleiben.Gleiches gilt für den Einschaltabschnitt 14. Voraussetzung hierfür ist, daß keine RC-Beschaltung 19 vorhanden ist und daß sich die Last am Transformator nur in bestimmten Grenzen ändert und beispielsweise 10 % der Nennlast nicht unterschreitet.
Liegt über dem Schalter 4 jedoch ein RC-Glied, welches das im Leerlauf stattfindende Rücksetzen der Magnetisierung wieder korrigiert,dann kann auch im Leerlauf mit einem fixen Anschalt-Rücksetzimpuls 13 gearbeitet werden.

Grundsätzlich richtet sich ,wenn ohne RC-Glied-Einfluß keine Entmagnetisierung vorliegt, der vorgesehene Effektivwert (Spannungs-Zeit-Fläche) des Abschalt-Rücksetzimpulses 13 nach der Summe der Spannungs-Zeit-Flächen des Abkommutierungsabschnittes 15, des Überschwing-Spannungsimpulses 16 sowie des Kriech-Bereiches 18. In Versuchen wurde herausgefunden, daß die Spannungs-Zeit-Flächen der vorgenannten Bereiche 15, 16 und 18 zusammen mit der Spannungs-Zeit-Fläche des Abschalt-Rücksetzimpulses 13 für ein spitzenstromfreies Einschalten des Transformators 2 oder dergleichen induktiver Last etwa der Spannungs-Zeit-Fläche des Einschaltabschnittes 14 zu Beginn einer Pulsgruppe entsprechen soll. Unter dieser Bedingung ergibt sich ein weitgehend gleichbleibender Abstand des erzwungenen Remanenzpunktes D vom Umkehrpunkt A der Hysteresekurve 11.
Erwähnt sei an dieser Stelle noch, daß anstatt mit einem negativen Halbwellenabschnitt die Pulsgruppe auch mit einem positiven Halbwellenabschnitt beginnen könnte, wobei dann wegen des größeren Abstandes des Remanenzpunktes D vom positiven Umkehrpunkt E der Hysteresekurve 11 ein entsprechend größerer Stromflußwinkel vorgesehen sein müßte. Zu beachten ist hierbei jedoch, daß sichergestellt ist, daß keine Ummagnetisierung des Transformatorkernes durch eine RC-Beschaltung 19 (vgl. Fig. 1) erfolgt, weil dadurch, bedingt durch eine vorhandene Phasenverschiebung, ungünstige Startbedingungen vorhanden sein können.Der Startpunkt liegt dann mit vorhandener Entmagnetisierung (RC-Glied) bei E′ und ohne die Entmagnetisierung bei D,weshalb dann nicht mehr mit einem fixen Einschaltabschnitt 14 gearbeitet werden kann(Fig.4).

Wird der Abschalt-Rücksetzimpuls 13 zu groß bemessen so tritt zumindest bei Transformatoren mit einem geringen Luftspalt, z.B. Schnittbandkern-Transformatoren oder Transformatoren mit hoher magnetischer Induktion, im Anschluß an den Abschalt-Rücksetzimpuls 13 ein gegenphasiger Spannungsimpuls auf, der den Einfluß des Abschalt-Rücksetzimpulses 13 teilweise wieder kompensiert. Somit ist praktisch ein "Selbstregelvorgang" vorhanden, der zumindest bei den vorerwähnten Transformatoren die Möglichkeit bietet, mit fest eingestellten Einschaltabschnitten 14 und fest eingestellten Abschalt-Rücksetzimpulsen 13 zu arbeiten.

Innerhalb der Hysteresekurve 11 ist in Fig. 4 noch eine kleine Hysteresekurve 11′ eingezeichnet. Die Ummagnetisierung nach dieser Kurve 11′erfolgt durch eine Wechselspannung, die dem Transformator 2 über die RC-Beschaltung 19 (Fig. 1) zugeführt wird. Diese Hysteresekurve 11′ stellt sich dann ein, wenn die Entmagnetisierung vollständig erfolgt ist. Dies ist beispielsweise nach einer längeren Bestromungspause und insbesondere bei unbelastetem Transformator der Fall. Ausgehend von dem instabilen Remanenzpunkt B würden sich parallel auf der Induktionsache 12 verschobene Entmagnetisierungskurven entsprechend der kleinen Hysteresekurve 11′ ergeben, bis schließlich die Hysteresekurve symmetrisch zum Diagrammnullpunkt, wie dargestellt verläuft.
Die Amplitude der Entmagnetisierungs-Wechselspannung hängt außer von der Größe des Widerstandes und des Kondensators der RC-Beschaltung 19 auch von der Belastung des Transformators 2 ab.
Wegen des Einflusses der RC-Beschaltung 19 ist für ein spitzenstromfreies Einschalten nach einer Pulsgruppen-Pause vorgesehen, daß mit einem zur letzten Ausschalthalbwelle gleichphasigem Spannungshalbwellen-Anschnitt die nächste Pulsgruppe gestartet wird. Durch die vorhandene Phasenverschiebung zwischen der Netzwechselspannung und der am Transformator 2 über die RC-Beschaltung 19 anstehenden Wechselspannung befindet sich nämlich die Magnetisierung des Transformators zu dem in Fig. 2 bei dem Einschaltabschnitt 14 angegebenen Zeitpunkt 20 etwa im Punkt F der kleinen Hysteresekurve 11′ (Fig. 4) und somit fast deckungsgleich mit dem sonst vorgegebenen Remanenzlage-Punkt D. Es sind somit bis zum Umkehrpunkt A der Hysteresekurve 11 weitestgehend gleiche Wegstrecken vorhanden, so daß auch für diese Betriebssituation Einschaltstromspitzen vermieden werden.
Würde man mit einer zur Phasenlage des Ausschalthalbwelle gegenphasigen, angeschnittenen Halbwelle, im Ausführungsbeispiel einer positiven Halbwelle bei der nächsten Pulsgruppe beginnen, so wäre mit einem hohen Einschaltspitzenstrom zu rechnen, da sich die Magnetisierung dann wegen der vorhandenen Phasenverschiebung zwischen Netzwechselspannung und der durch das RC-Glied zugeführten, am Transformator anliegenden Wechselspannung etwa im Umkehrpunkt E′ befinden würde. Bei einer Bemessung des Halbwellenan-schnittwinkels der ersten positiven Halbwelle wie bei einem ohne Einfluß der RC-Beschaltung 19 vohandenem Remanenzpunkt D, würde sich durch die wesentlich kürzere Wegstrecke zwischen E′ und dem Umkehrpunkt E ein hoher Einschaltspitzenstrom ergeben, da die Magnetisierung weit in die Sättigung getrieben werden würde. Wie vorstehend beschrieben, kann somit der Einfluß der Entmagnetisierung durch die RC-Beschaltung 19 durch Rücksetzen der Magnetisierung mittels des Abschalt-Rücksetzimpulses 13 auf die zum Koordinatennullpunkt bezogen symmetrische Hysteresekurve 11′ weitgehend kompensiert werden. Man hat somit trotz der sich innerhalb der kleinen Hysteresekurve 11' umlaufenden Magnetisierungsänderung zum Einschaltzeitpunkt etwa gleiche Ausgangsvorraussetzungen, wie sie auch ohne Einfluß der RC-Beschaltung vorhanden sind.

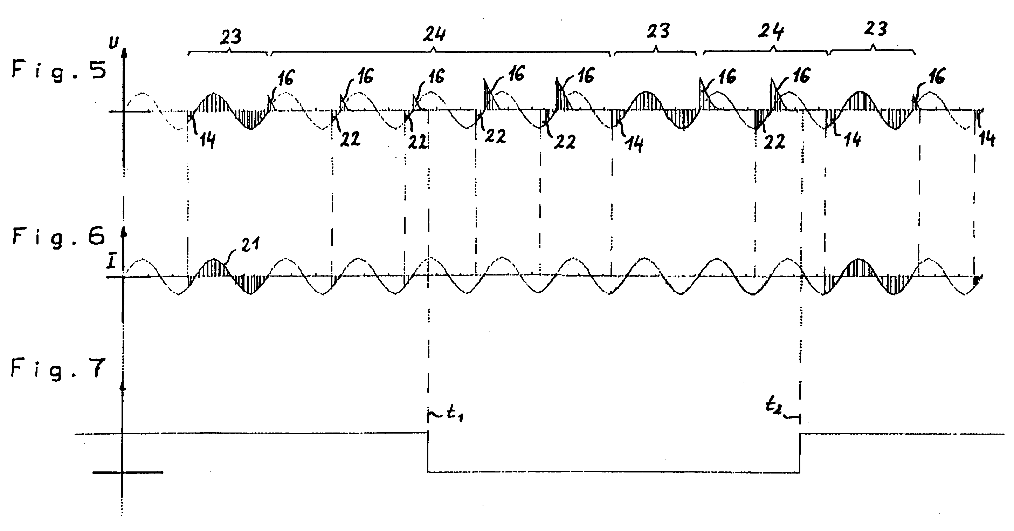

Die Figuren 5 bis 7 zeigen ein Verfahren, bei dem ebenfalls bezüglich der Remanenzlage etwa gleichbleibende Ausgangssituationen für ein nachfolgendes Einschalten geschaffen werden. Bei dem Verfahren gemaß den Figuren 2 bis 4 wurde die remanente Induktion durch den Abschalt-Rücksetzimpuls 13 zu kleineren Werten, also mehr zum Nullpunkt hin, definiert verschoben. Es besteht aber auch, wie anhand der Figuren 5 bis 7 nachfolgend beschrieben, die Möglichkeit, die remantente Induktion nach dem Abschalten der an dem Transformator 2 anliegenden Versorgungsspannung etwa in Richtung zum Remanenzpunkt B (Fig. 4) zu verschieben. Es wird hier also umgekehrt wie bei Fig. 2 und 3 die Remanenz zu größeren Werten verschoben und dort in einem bestimmten Bereich gehalten.Der Einschaltabschnitt 14 muß in diesem Fall entsprechend kleiner vorgesehen sein.
Man erreicht dies, indem der Transformator 2 in den Pulsgruppenpausen mit gegenüber dem Lastfall reduziertem Spannungs-Effektivwert beaufschlagt wird, wobei diese Spannungsbeaufschlagung jeweil gleichphasig zu der letzten Spannungshalbwelle einer Pulsgruppe erfolgt. Diese kleinen, gleichphasigen Spannungsanschnitte sind in Fig. 5 mit 22 bezeichnet.
In Fig. 5 ist die Netzwechselspannung dargestellt sowie vertikal schraffiert die am Transformator anstehende Spannung gekennzeichnet. Der Zeitabschnitt zeigt drei Pulsgruppen 23 mit da-zwischen befindlichen Pulspausen 24.
In der zugeordneten Diagrammzeile nach Fig. 6 ist der zugehörige Wirkstrom 21 aufgetragen.
Schließlich zeigt die Diagrammzeile nach Fig. 7, zu welchem Zeitpunkt eine Last 10 an den Transformator 2 angeschlossen ist.Eine solche Situation ergibt sich beispielsweise beim Punktschweißen.

Fig. 5 läßt gut die in den Pulspausen 24 vorgesehenen Spannungsabschnitte 22 und Fig. 6 die zugehörigen Strombeaufschlagung des Transformators erkennen.
Am Ende jeder Spannungsbeaufschlagung, d.h. am Ende einer Pulsgruppe 23 und auch am Ende einer Spannungsbeaufschlagung mit den Spannungsabschnitten 22 entstehen die gegenphasigen Überschwing-Spannungsimpulse 16, deren Größe von der Belastung des Transformators 2 abhängt. Entsprechend der Größe (Spannungs-Zeit-Fläche) der Überschwing-Spannungsimpulse 16 wird auch die Größe des Spannungsabschnittes 22 proportional verändert. Dies ist deutlich am Ende der ersten Pulspause 24 zu erkennen, wo die Last zum Zeitpunkt t 1 beim Transformator ausgeschaltet wurde. Der zum nächsten Spannungsabschnitt 22 nach dem Ausschaltzeitpunkt t 1 gehörende Überschwing-Spannungsimpuls ist dementsprechend wesentlich größer als der vorhergehende. Dementsprechend wird dann auch die Größe des nächsten Spannungsabschnittes 22 vergrößert. Damit werden Änderungen der remanenten Magnetisierung auch bei wechselnden Lasten 19 selektiv berücksichtigt und der Einfluß der Entmagnetisierung durch die RC-Beschaltung 19 und durch das "Kriechen" beseitigt.
In Figur 6, wo der Wirkstrom dargestellt ist,ist auch erkennbar, daß in der Lastpause zwischen den Zeitpunkten t1 und t2 kein Wirkstrom fließt.
Am Ende der zweiten Pulsgruppe 23 ergibt sich ein sehr großer Überschwing-Spannungsimpuls 16, weil der Trans-formator hier im Leerlauf betrieben wurde. Dementsprechend ist auch der Spannungsabschnitt 22 vergleichsweise groß. Gleiches gilt dann auch für die dritte Pulsgruppe 23, die mit einem vergleichsweise großen Einschaltabschnitt 14 beginnt. Da die Last zum Zeitpunkt t 2 wieder an den Transformator geschaltet wurde ergibt sich am Ende der dritten Pulsgruppe 23 nur ein kleiner Überschwing-Spannungsimpuls 16, so daß dementsprechend auch wiederum der nächste Einschaltabschnitt 14 im Gegensatz zu dem vorhergehenden wesentlich kleiner sein kann.

Zur Steuerung der Größe der Spannungsabschnitte 22 und auch der Einschaltabschnitte 14 erfolgt in den Pulspausen 24 eine Wirkstrommessung, wobei bei reduziertem oder nicht mehr vorhandenem Wirkstrom, z. B. weil die Last abgeschaltet wurde, die Spannungsabschnitte 22 steigend bis zu einem eingstellten Festwert vergrößert werden, damit sich die Entmagnetisierung und das langsame Reduzieren der Remanenz("Kriechen") nicht auswirken können und damit die Transformatorinduktion nahe dem instabilen Remanenzpunkt B gehalten wird.
Wie bereits vorerwähnt richtet sich die Größe des jeweiligen nächsten Spannungsabschnittes 22 bzw. Einschaltabschnittes 14 proportional nach der Größe des vorangegangenen Überschwing-Spannungsimpulses 16 zuzüglich einem vorgesehen Festwert während der Leerlaufzeit.

Der vorbeschriebene Funktionsablauf trifft insbesondere auch für Schweißtransformatoren zum Punktschweißen zu, wo sekundärseitig als Last an den Transformator eine Schweißzange mit Zangen-Elektroden angeschlossen ist. Befinden sich die Zangen-Elektroden in Kontakt mit dem Punktschweißbereich, so entsteht eine entsprechende Last für den Transformator, während bei geöffneter Zange der Transformator im Leerlauf arbeitet. Bei einem solchen Punktschweißen wird laufend die Last ein- und ausgeschaltet, so daß hier erhöht die Gefahr von Einschaltstromspitzen vorhanden ist. Durch das erfindungsgemäße Verfahren sowohl gemäß Fig. 2 bis 4 als auch gemäß Fig. 5 bis 7 lassen sich aber auch hierbei Stromspitzen vermeiden.

Vorteilhaft ist bei dem Verfahren gemäß Fig. 5 bis 7 insbesondere bei Anwendung in Verbindung mit einem Punkt-Schweißtransformator, daß auch bei fehlerhaft kontaktierenden Zangen-Elektroden keinerlei Blindstromspitzen erzeugt werden, weil bei fehlendem Zangenkontakt automatisch der Überschwing-Spannungsimpuls 16 ansteigt und damit der nächste Spannungsanschnitt 22 innerhalb einer Pulspause 24 oder aber der Einschaltabschnitt 14 auf den richtigen Anschnittwert eingestellt wird. Somit läßt sich mit diesem Verfahren ein Punktschweißtransformator unter allen Last- und Pausen-Bedingungen blindstrom-spitzenfrei einschalten. Zusätzlich ist hier noch von Vorteil, daß die erste Halbwelle der Bestromung nicht wie bisher etwa zur Hälfte phasenangeschnitten sein muß, was einer anfänglichen Schweißstromreduzierung entspricht, sondern daß hier voll eingeschaltet werden kann und damit die Schweißzeit reduziert werden kann. Dies und auch das Vermeiden von Stromspitzen trägt mit zu einer erheblichen Stromeinsparung bei. Außerdem kann auf eine Überdimensionierung der Bauteile im Stromkreis verzichtet werden.

Erwähnt sei noch, daß anstatt mit einer Pulsgruppe mit wenigstens einer Periodenlänge der Transformator auch im abwechselnd gegenpoligen Halbwellen-Betrieb strombeaufschlagt werden kann, wobei zwischen zwei gegenphasigen Halbwellen jeweils ein Pulspause vorgesehen ist.
Weiterhin sei erwähnt, daß zur Bestimmung des Abschalt-Rücksetzimpulses und/oder zur Bestimmung der Spannungsbeaufschlagung in den Pulsgruppenpausen und/oder zur Bestimmung des Einschaltzeitpunktes innerhalb einer Spannungswelle, der während der letzten Spannungshalbwelle vor dem Ausschalten fließende Strom sowie die Länge der Pulsgruppenpause gemessen werden kann.
Um auch Netzfehler ausregeln zu können, beispielsweise wenn eine Netzspannungshalbwelle zu klein ist, kann dies durch Messung des Stromes oder der Spannungs-Zeit-Fläche erkannt werden und die nächste, dazu gegenphasige Netzspannungshalbwelle und gegebenenfalls auch noch weitere soweit in ihrem Effektivwert durch Dimmen reduziert werden, daß die Spannungs-Zeit-Flächen der gestörten Netzspannungshalbwelle und der folgenden Netzspannungshalbwelle gleich sind. Danach kann dann wieder auf volle Netzspannungshalbwellen hochge-dimmt werden.

Wenn die laufende Netzspannungshalbwelle zu groß ist, wird an deren Ende ausgeschaltet und anschließend wieder ein neuer Einschaltvorgang gestartet, bei dem die Magnetisierung zunächst bis in einen Umkehrpunkt A oder E der Magnetisierungskurve geführt und dann passend dazu eingeschaltet wird.

## Patentansprüche

1. Verfahren zur Reduzierung des Einschaltstromstoßes beim Betreiben einer induktivitätsbehafteten und mit einem magnetisierbaren Kern versehenen Last an einem Wechselstromnetz, insbesondere eines Transformators, wobei zumindest zeitweise ein Phasenanschnitt vorgesehen ist und ein Abschalten der Last im Nulldurchgang der treibenden Netzwechselspannung vorgesehen ist, wobei nach dem Abschalten der induktiven Last vom Wechselstromnetz diese induktive Last mit einem Abschalt-Rücksetzimpuls beaufschlagt wird, **dadurch gekennzeichnet,** daß der Abschalt-Rücksetzimpuls (13) innerhalb der auf den Abschaltzeitpunkt folgenden Spannungshalbwelle oder einer zu dieser gleichphasigen, nachfolgenden Spannungshalbwelle für einen vorgebbaren Zeitabschnitt innerhalb einer dieser Halbwellen vorgesehen ist und daß der Abschalt-Rücksetzimpuls bezüglich seiner Spannungs-Zeit-Fläche in Abhängigkeit von der Amplitude oder der Spannungs-Zeit-Fläche des nach dem Abschalten auftretenden Überschwing-Spannungsimpulses (16) bemessen wird und um so größer eingestellt wird, je kleiner der Überschwing-Spannungsimpuls ist.

2. Verfahren nach Anspruch 1, dadurch gekennzeichnet, daß die induktive Last, insbesondere ein Transformator (2), mit einer vor dem letzten Abschaltzeitpunkt vorhandenen Spannungs-Phasenlage eingeschaltet wird und daß der Stromflußwinkel in dieser Einschalthalbwelle so bemessen ist, daß sich im Leerlauf der direkt nachfolgenden Wechselspannungsperiode auch bei wechselnder Last und bei wechselnden Pausenzeiten etwa symmetrische Blindströme ergeben.

3. Verfahren nach Anspruch 1 oder 2, dadurch gekennzeichnet, daß der Stromflußwinkel in der Einschalthalbwelle größer ist als der des Abschalt-Rücksetzimpulses (13) und daß der Unterschied bei Betrieb an einem 50 Hertz-Wechselstromnetz mindestens 50 Mikrosekunden beträgt.

4. Verfahren nach einem der Ansprüche 1 bis 3, dadurch gekennzeichnet, daß die an Pulsgruppen betriebene induktive Last (2) in den Pulsgruppenpausen mit gegenüber dem Lastfall reduziertem Spannungs-Effektivwert beaufschlagt wird und daß diese Beaufschlagung jeweils gleichphasig mit der Spannungsbeaufschlagung im Leerlauf oder Lastfall vor dem Abschaltzeitpunkt erfolgt.

5. Verfahren nach Anspruch 4, dadurch gekennzeichnet, daß die jeweiligen Strombeaufschlagungen der induktiven Last (2) in den Pulsgruppenpausen bezüglich ihrer Spannungs-Zeit-Flächen in Abhängigkeit von der Größe des Überschwing-Spannungsimpulses nach dem Ausschalten der induktiven Last (2) oder nach einem direkt vorangegangenen Strombeaufschlagungspuls, insbesondere proportional dazu eingestellt werden.

6. Verfahren nach Anspruch 4 oder 5, dadurch gekennzeichnet, daß bei einem die Last bildenden Transformator die Strombeaufschlagung in den Pulsgruppenpausen nur bei Leerlauf der Sekundärseite des Transformators (2) vorgenommen wird.

7. Verfahren nach Anspruch 6, dadurch gekennzeichnet, daß zur Erkennung einer sekundärseitigen Belastung des Transformators (2) dieser in den Pulsgruppenpausen (24) mit Spannungshalbwellenanschnitten (22) mit geringem Stromflußwinkel bzw. Effektivwert beaufschlagt wird, daß dabei der Wirkstrom gemessen und beim Ausbleiben eines Wirkstromes der Stromflußwinkel der Spannungshalbwellenanschnitte (22) bis zu einem einstellbaren Wert erhöht wird.

8. Verfahren nach einem der Ansprüche 1 bis 7, dadurch gekennzeichnet, daß zur Bestimmung des Abschalt-Rücksetzimpulses (13) und/oder zur Bestimmung der Spannungsbeaufschlagung in den Pulsgruppenpausen (24) und/oder zur Bestimmung des Einschaltzeitpunktes innerhalb einer Spannungshalbwelle, der während der letzten Spannungshalbwelle vor dem Ausschalten fließende Strom sowie die Länge der Pulsgruppenpause gemessen werden.

9. Verfahren nach einem der Ansprüche 1 bis 8, dadurch gekennzeichnet, daß beim Auftreten von Netzfehlern einerseits mit Spannungseinbrüchen, die auf die Netzhalbwelle mit einem Spannungseinbruch folgende Netzhalbwelle durch Andimmen in ihrem Effektivwert im gleichen Maße wie der Spannungseinbruch verringert wird und daß andererseits bei einer Überspannung die nach dem Auftreten der Überspannung folgende Netzhalbwelle mit gleicher Polarität durch Andimmen in ihrem Effektivwert reduziert wird.

## Claims

1. A process for the reduction of switch-on surges in current in the operation of an inductive load provided with a magnetizable core at an alternating current mains, in particular a transformer, with at least temporarily a phase operating angle being provided and a switch-off of said load being provided in the zero passage of the driving mains alternating voltage, with a switch-off-reset impulse being applied to said inductive load following switch-off thereof from the alternating current mains, characterized in that said switch-off-reset impulse (13) is provided within the voltage halfwave following the switch-off moment in time or a subsequent voltage halfwave in-phase thereto for a predetermined period of time within one of said halfwaves and that said switch-off-reset impulse is dimensioned with regard to its voltage-time area in dependence on the amplitude or the voltage time area of the overshoot-voltage impulse (16) occurring following switching-off and is set proportionately larger, the smaller said overshoot voltage impulse is.

2. A process according to claim 1,
characterized in that said inductive load, in particular, a transformer (2), is switched on having a voltage-phase-state present prior to the last switch-off moment in time and that the current flow angle in this switch-on halfwave is dimensioned in such a manner that when there is no load in the immediately following alternating voltage period, approximately symmetrical reactive currents are yielded even in the event of varying loads and varying pause periods.

3. A process according to Claim 1 or 2,
characterized in that said current flow angle in the switch-on halfwave is larger than that of said switch-off-reset impulse (13) and that the difference amounts to at least approximately 50 microseconds in the operation at a 50 hertz alternating current mains.

4. A process according to one of the claims 1 to 3,
characterized in that in the pulse groups pauses to said inductive load (2) operated at pulse groups is applied a voltage of reduced effective value compared to when there is a load and that this application occurs in phase with the voltage application when there is no load or there is a load prior to said switch-off moment in time.

5. A process according to claim 4,
characterized in that the respective applications of current to said inductive load (2) in said pulse group pauses are set with regard to their voltage time areas in dependence of the magnitude of said overshoot-voltage impulse following switching-off of said inductive load (2) or following an immediately preceding current application impulse, in particular, proportionately thereto.

6. A process according to claims 4 or 5,
characterized in that in a transformer forming said load the current is applied in said pulse group pauses is only when there is no load at the secondary side of said transformer (2).

7. A process according to claim 6,
characterized in that in order to detect a load at the secondary side of said transformer (2), in said pulse group pauses (24) to the latter is applied voltage half-wave phases (22) with small current flow angles, respectively small effective values, with the active current being measured and in the event an active current does not occur, said current flow angle of said voltage halfwave phases (22) is raised to a settable value.

8. A process according to one of the claims 1 to 7,
characterized in that in order to determine said switch-off-reset impulse (13) and/or in order to determine said voltage application in said pulse group pauses (24) and/or to determine said switch-on moment in time within a voltage halfwave, the current flowing during the last voltage halfwave prior to switching-off and the length of the pulse group pause are measured.

9. A process according to one of the claims 1 to 8,
characterized in that in the event of mains faults, on the one hand with voltage drops, the mains halfwave following the mains halfwave with a voltage drop is reduced in its effective value by dimming up to the same extent as said voltage drop is reduced, and that, on the other hand, in the event of an overvoltage, the mains halfwave having the same polarity following the occurrence of the over-voltage is reduced in its effective value by dimming.

## Revendications

1. Procédé pour réduire l'impulsion de courant de branchement lors du fonctionnement d'une charge affectée d'une inductance et pourvue d'un noyau aimantable, dans un réseau à courant alternatif, notamment d'un transformateur, selon lequel est prévu au moins par instants un découpage de phase et il est prévu une déconnexion de la charge lors du passage par zéro de la tension alternative du réseau, qui effectue la commande, et selon lequel après la déconnexion de la charge inductive du réseau à courant alternatif, cette charge inductive est chargée par une impulsion d'annulation de déconnexion, caractérisé en ce que l'impulsion de suppression de déconnexion (13) est prévue au cours de l'alternance de tension qui succède à l'instant de déconnexion ou d'une alternance de tension suivante, de même phase que l'alternance précédente, et ce pendant un intervalle de temps prédéterminé à l'intérieur de l'une de ces alternances, et que la surface tension-temps de l'impulsion de suppression de déconnexion est dimensionnée en fonction de l'amplitude ou de la surface tension-temps de l'impulsion de tension de suroscillation (16) qui apparaît après la déconnexion, et est réglée à une valeur de temps d'autant plus élevée que l'impulsion de tension de suroscillation est faible.

2. Procédé selon la revendication 1, caractérisé en ce que la charge inductive, notamment un transformateur (2), est branchée avec une position de phase de tension présente avant le dernier instant de déconnexion et que l'angle du flux de courant pendant cette alternance de branchement est dimensionné de manière que lors du fonctionnement à vide au cours de la période immédiatement suivante de la tension alternative, on obtient des courants réactifs approximativement symétriques même dans le cas d'une charge alternative et dans le cas de durées d'impulsions alternatives.

3. Procédé selon la revendication 1 ou 2, caractérisé en ce que l'angle du flux de courant est plus élevé pendant l'alternance de branchement que pendant l'impulsion de suppression de déconnexion (13) et que la différence lors du fonctionnement avec un réseau alternatif à 50 hertz est égale à 50 microsecondes.

4. Procédé selon l'une des revendications 1 à 3, caractérisé en ce que la charge inductive (2), qui agit sur les groupes d'impulsions, est chargée, pendant les pauses entre les groupes d'impulsions, avec une valeur efficace de tension qui est réduite par rapport au cas de charge, et que cette charge s'effectue respectivement en phase avec la charge de tension lors du fonctionnement à vide ou dans le cas de la charge, avant l'instant de déconnexion.

5. Procédé selon la revendication 4, caractérisé en ce que les charges respectives en courant de la charge inductive (2) pendant les pauses entre les groupes d'impulsions, en rapport avec leurs surfaces tension - temps, sont réglées en fonction de l'amplitude de l'impulsion de tension de suroscillation après la déconnexion de la charge inductive (2) ou après une impulsion de charge de courant directement précédente, notamment proportionnellement à cette impulsion.

6. Procédé selon la revendication 4 ou 5, caractérisé en ce que dans le cas d'un transformateur constituant la charge, la charge en courant pendant les pauses entre les groupes d'impulsions est réalisée uniquement lors du fonctionnement à vide du côté secondaire du transformateur (2).

7. Procédé selon la revendication 6, caractérisé en ce que pour identifier une charge, présente côté secondaire, du transformateur (2), ce dernier est chargé, pendant les pauses (24) entre les groupes d'impulsions, par des parties d'alternance de tension (22) ayant un faible angle du flux de courant ou une faible valeur efficace et que le courant actif est mesuré et, lors de l'absence d'un courant actif, l'angle du flux de courant des sections d'alternance de tension (22) est accru jusqu'à une valeur réglable.

8. Procédé selon l'une des revendications 1 à 7, caractérisé en ce que pour la détermination de l'impulsion de suppression de déconnexion (13) et/ou pour la détermination de la charge de tension pendant les pauses (24) entre les groupes d'impulsions et/ou pour la détermination de l'instant de branchement au cours d'une alternance de tension on mesure le courant, qui circule pendant la dernière alternance de tension avant la déconnexion, ainsi que la durée de la pause entre les groupes d'impulsions.

9. Procédé selon l'une des revendications 1 à 8, caractérisé en ce que, lors de l'apparition de défauts dans le réseau, d'une part avec des baisses de tension, la valeur efficace de l'alternance du réseau, qui succède à l'alternance comprenant la baisse de tension, est réduite par gradation, au même degré que la baisse de tension, et que d'autre part dans le cas d'une surtension, la valeur efficace de l'alternance du réseau, qui succède à l'apparition de la surtension et possède la même polarité, est réduite par gradation.
